# EUROPÄISCHE PATENTSCHRIFT

(11) **EP 2 221 610 B1**
(45) Veröffentlichungstag und Bekanntmachung des Hinweises auf die Patenterteilung: **07.05.2014**
(21) Anmeldenummer: 10001602.1
(22) Anmeldetag: 17.02.2010
(51) Int. Cl.: G01N 25/56, G01W 1/04, G01W 1/11

(54) **Vorrichtung zum Messen der Luftfeuchtigkeit und Lufttemperatur**
Device for measuring air humidity and air temperature
Dispositif de mesure de l'humidité de l'air et de la température de l'air

(30) Priorität: 18.02.2009 DE 102009009438
(43) Veröffentlichungstag der Anmeldung: 25.08.2010
(73) Patentinhaber: Conrad Electronic SE, 92240 Hirschau (DE)
(72) Erfinder: Kiewert, Achim, 99441 Kleinschwabhausen (DE)
(74) Vertreter: Förster, Susanne

(56) Entgegenhaltungen:
- EP-A1- 1 724 612
- WO-A1-2009/015082
- DE-A1- 2 152 130
- US-A- 4 875 381
- US-A1- 2005 156 746

## Beschreibung

Die Erfindung betrifft eine Vorrichtung zum Messen der Luftfeuchtigkeit und/oder Lufttemperatur mit einem ersten Gehäuse, welches mit Lüftungseinlässen versehen ist und in welchem mindestens ein Sensor zur Messung der Luftfeuchtigkeit und/oder Lufttemperatur angeordnet ist, sowie mit einer Anzeigeeinrichtung.

Solche Vorrichtungen sind aus WO 2009/015082, US 4875381 und EP 1724612 bekannt.

Derartige Vorrichtungen zum Messen der Luftfeuchtigkeit, die meist auch die Lufttemperatur erfassen, werden auch als Hygrometer bezeichnet. Solche Hygrometer weisen im Inneren eines Gehäuses mindestens einen Sensor zur Messung der Luftfeuchtigkeit sowie Lufttemperatur auf, um schließlich mittels eines Prozessors die relative Luftfeuchtigkeit in Prozent anzugeben. Die relative Luftfeuchtigkeit bezeichnet das Verhältnis des momentanen Wasserdampfgehaltes in der Atmosphäre zum maximal möglichen Wasserdampfgehalt bei derselben Temperatur. Sensor und Prozessor sind meist zusammen auf einer Platine angeordnet. Außerdem weist das Gehäuse Lüftungseinlässe auf, so dass die Umgebungsluft bis zu dem mindestens einen Sensor im Inneren des Gehäuses vordringen kann. Außerdem ist eine Anzeigeeinrichtung vorgesehen, die die gemessene Luftfeuchtigkeit und eventuell auch die gemessene Lufttemperatur anzeigt.

Der vorliegenden Erfindung liegt die Aufgabe zugrunde, eine gattungsgemäße Vorrichtung zum Messen der Luftfeuchtigkeit und/oder Lufttemperatur zur Verfügung zu stellen, welche variabel an unterschiedlichen Orten einsetzbar ist.

Diese Aufgabe wird durch die gesamte Lehre des Anspruchs 1 gelöst. Vorteilhafte Weiterbildungen der Erfindung ergeben sich aus den Unteransprüchen 2 - 15.

Erfindungsgemäß ist ein erstes Gehäuse vorgesehen, das zumindest bereichsweise in ein zweites Gehäuse einsetzbar ist, welches eine größere Höhe aufweist als das erste Gehäuse. Dadurch erhält die gesamte Vorrichtung eine höhere Bauweise und ist besonders für die Tischaufstellung geeignet. Die Anzeigevorrichtung ist insbesondere in dem ersten Gehäuse angeordnet, so dass der Betrachter diese aufgrund der hohen Bauweise der Vorrichtung gut erkennen und die dann angezeigten Daten leicht ablesen kann. Bei Bedarf kann das erste Gehäuse auch von dem zweiten Gehäuse entfernt werden, wodurch wieder eine niedrigere Gesamthöhe der Vorrichtung erzielt wird. Das erste Gehäuse mit der geringeren Bauhöhe ist insbesondere für die Wandmontage geeignet, da es an der Wand nicht zu weit nach außen hervorsteht.

Das erste und das zweite Gehäuse sind in ihrer Form, insbesondere im zusammengesetzten Bereich, aufeinander abgestimmt. Dadurch wird zum einen gewährleistet, dass die beiden Gehäuse in optimaler Weise zusammengefügt werden können. Andererseits besteht auch in optischer Hinsicht ein Vorteil, da die aus beiden Gehäusen zusammengesetzte Vorrichtung ein einheitliches Erscheinungsbild aufweist.

Das erste Gehäuse kann eine Öse, einen Haken oder dergleichen zur Wandmontage aufweisen. Im zusammengesetzten Zustand mit dem zweiten Gehäuse ist die Öse oder der Haken in vorteilhafter Weise nicht sichtbar.

Vorteilhafterweise kann das erste Gehäuse mit dem zweiten Gehäuse verrastbar sein, so dass eine stabile Einheit geschaffen wird. Die Verrastbarkeit hat außerdem den Vorteil der einfachen Handhabung, da die beiden Gehäuse in einfacher und schneller Weise miteinander verbindbar sind.

Das zweite Gehäuse ist ebenso wie auch das erste Gehäuse mit Lüftungseinlässen, insbesondere Lüftungsschlitzen, versehen. Dadurch wird die Luftzirkulation auch im zusammengesetzten Zustand der beiden Gehäuseteile sichergestellt.

Die Lüftungseinlässe können in gleichmäßiger Anordnung um das erste und/oder zweite Gehäuse vorgesehen sein. Dies dient der gleichmäßigen Luftzirkulation und damit Luftzuführung zum Sensor, der im ersten Gehäuse angeordnet ist. Außerdem ist die gleichmäßige Anordnung der Lüftungseinlässe auch für das optische Erscheinungsbild der Vorrichtung vorteilhaft. Z.B. kann eine bestimmte Anzahl von Lüftungseinlässen nebeneinander angeordnet sein, wobei sich diese Gruppierung in gleichmäßiger Anordnung wiederholt.

Das erste Gehäuse weist einen oberseitigen Gehäuserahmen auf, der auf einer unterseitigen Gehäusewanne aufliegt. Dabei liegt der Gehäuserahmen auf einem umlaufenden, nach außen weisenden Rand der Gehäusewanne auf. Stirnseitig auf dem Gehäuserahmen kann die Anzeigevorrichtung angeordnet sein. Durch den Gehäuserahmen wird ein gewisser Abstand zwischen den Elementen, die in der Gehäusewanne angeordnet sind, sowie der Anzeigevorrichtung hergestellt.

Im zusammengesetzten Zustand liegt der nach außen weisende Rand des ersten Gehäuses bzw. der Gehäusewanne auf der offenen Stirnseite des zweiten Gehäuses auf. Dadurch wird verhindert, dass das erste Gehäuse in das zweite Gehäuse fallen kann oder mit dem zweiten Gehäuse in einer unerwünschten Position verklemmen kann. Eine sichere Positionierung von erstem zu zweitem Gehäuse ist gewährleistet.

Mit besonderem Vorteil kann der Gehäuserahmen eine insbesondere über seinen gesamten Umfang verlaufende Leuchteinrichtung aufweisen. Diese kann unterschiedliche Funktionen übernehmen. Beispielsweise kann die Leuchteinrichtung ab einem bestimmten Feuchtigkeits- und/oder Temperaturgrad leuchten. Indem die Leuchteinrichtung um den gesamten Umfang des Gehäuserahmens verläuft, ist sie von allen Seiten gut sichtbar. Außerdem wird damit auch ein besonderer optischer Effekt erzielt, der der gesamten Vorrichtung ein interessantes Aussehen verleiht.

Zweckmäßigerweise kann der Feuchtigkeits- und/oder Temperaturgrad einstellbar sein, ab welchem die Leuchteinrichtung leuchten soll.

Das erste Gehäuse und/oder das zweite Gehäuse kann in Draufsicht rechteckig, insbesondere quadratisch, ausgestaltet sein. Ferner kann die aus erstem und zweitem Gehäuse zusammengesetzte Vorrichtung im Wesentlichen würfelförmig ausgestaltet sein. Die zusammengehörige Einheit von erstem und zweitem Gehäuse wird durch eine Würfelform besonders deutlich. Die Vorrichtung stellt somit gleichzeitig ein interessantes Designobjekt dar.

Vorteilhafterweise kann ein Sender zur Funkdatenübertragung vorgesehen sein, welcher in oder an der Vorrichtung angeordnet ist. Auf diese Weise sind die Daten von einem anderen Ort, an welchem der Empfänger vorgesehen ist, empfangbar und ablesbar.

Die oben beschriebene Gehäusewanne kann eine Aufnahme für Batterien oder Akkumulatoren aufweisen. Die Stromversorgung ist damit sowohl für das erste Gehäuse als reines Wandgerät als auch für die kombinierte Vorrichtung als Tischgerät gewährleistet.

Der Sensor und/oder die Anzeigeeinrichtung können auf einer Platine angeordnet sein. Die Platine kann in oder auf die Gehäusewanne eingesetzt sein. Es ist dadurch sichergestellt, dass die durch die Lüftungsschlitze einströmende Luft auch den Sensor erreicht, der für die Messung der Temperatur sowie der Feuchtigkeit zuständig ist.

Die Vorrichtung kann außerdem einen Datenspeicher (Datenlogger) aufweisen, der z.B. auch auf der Platine angeordnet sein kann. Mittels des Datenspeichers können Messdaten, wie z.B. die Luftfeuchtigkeit und/oder die Lufttemperatur, somit auch Taupunktbestimmung über einen bestimmten Zeitraum gespeichert werden. Diese Datenspeicherung kann eine wichtige und interessante Information für den Benutzer darstellen (z.B. Schimmelpilzvermeidung).

Zweckmäßigerweise kann eine Schnittstelle (drahtgebunden und/oder Funkschnittstelle) zur Datenübertragung vorgesehen sein, um die auf dem Speicher aufgezeichneten Daten z.B. an einen Computer oder eine andere Datenverarbeitungseinheit zu übermitteln und von dort auslesen zu können. Beispielsweise kann auf diese Weise der Luftfeuchtigkeits- und Lufttemperaturverlauf über einen bestimmten Zeitraum graphisch oder tabellarisch aufgezeichnet werden.

Die Erfindung ist anhand eines vorteilhaften Ausführungsbeispiels in den Zeichnungsfiguren näher erläutet. Diese zeigen:
- Fig. 1:: perspektivische Darstellung der Vorrichtung umfassend ein erstes und zweites Gehäuse;

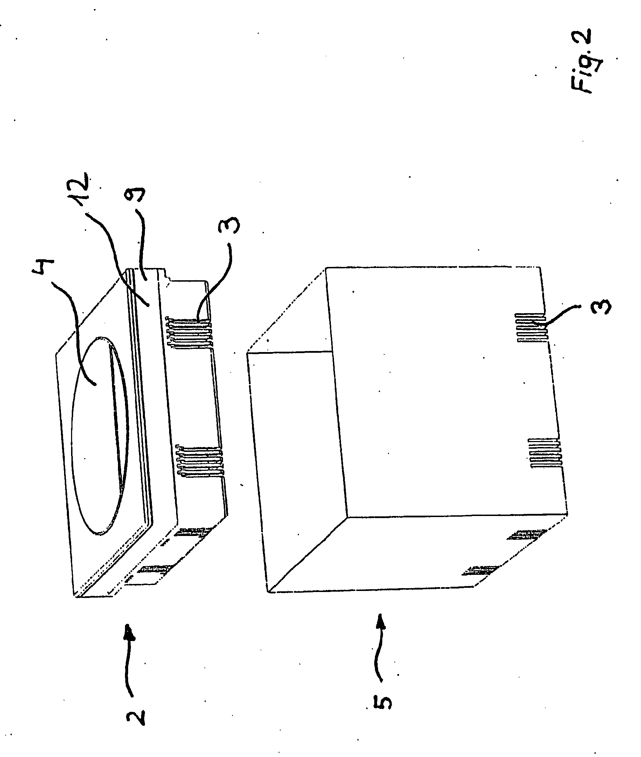

- Fig. 2:: perspektivische Darstellung der Vorrichtung gemäß Fig. 1 mit angehobenem ersten Gehäuse;
- Fig.3:: perspektivische Darstellung der Vorrichtung mit senkrecht angeordnetem ersten Gehäuse sowie
- Fig. 4:: Explosionsdarstellung der einzelnen Bestandteile der Vorrichtung.

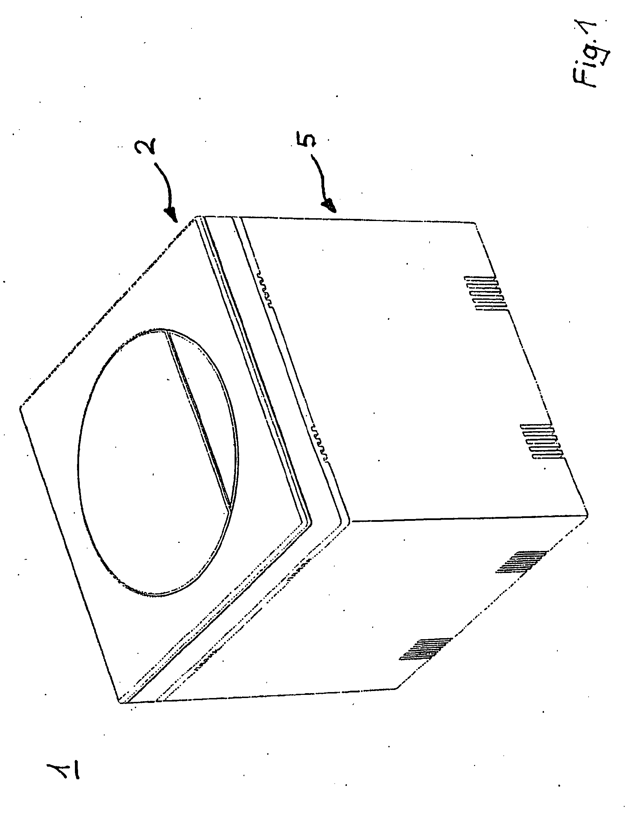

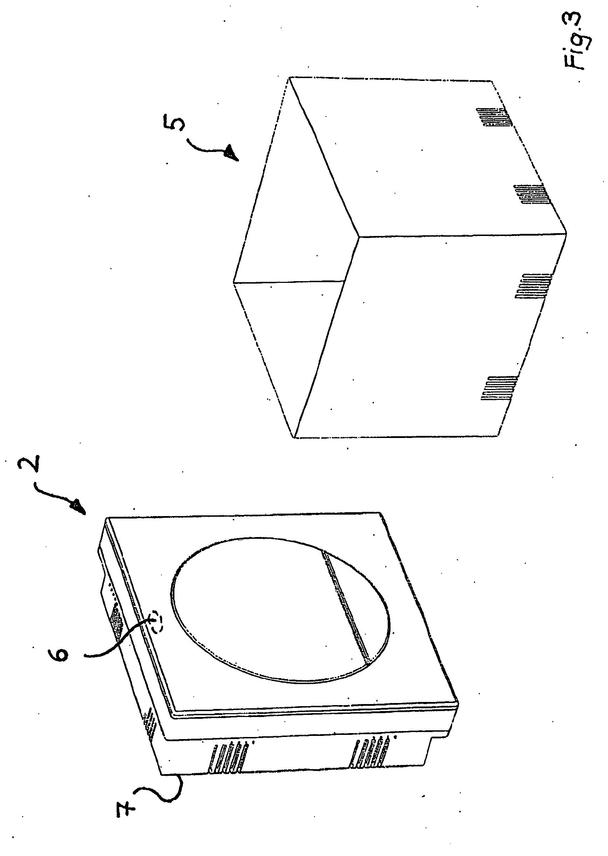

Bezugsziffer 1 bezeichnet die Vorrichtung in ihrer Gesamtheit. Die Vorrichtung dient dem Messen der Luftfeuchtigkeit und/oder Lufttemperatur. Sie umfasst ein erstes Gehäuse 2, welches mit Lüftungseinlässen 3 versehen ist und in welchem mindestens ein Sensor zur Messung der Luftfeuchtigkeit und/oder Lufttemperatur angeordnet ist, sowie eine Anzeigeeinrichtung 4. Das erste Gehäuse 2 ist dabei zumindest bereichsweise in ein zweites Gehäuse 5 einsetzbar, welches eine größere Höhe aufweist als das erste Gehäuse 2. Es ist somit in vorteilhafter Weise möglich, die Vorrichtung entweder im zusammengesetzten Zustand (siehe Fig. 1) als Tischgerät oder auch das erste Gehäuse alleine z.B. als Wandgerät (siehe Fig. 3) zu verwenden. Selbstverständlich kann das erste Gehäuse 2 alleine auch als Tischgerät verwendet werden. In Kombination mit dem zweiten Gehäuse 5 ist es jedoch für die Tischaufstellung besonders geeignet, da es durch die wesentlich größere Höhe besonders gut sichtbar ist.

Wie aus den Zeichnungsfiguren hervorgeht, sind das erste Gehäuse 2 und das zweite Gehäuse 5 in ihrer Form u.a. im zusammengesetzten Bereich aufeinander abgestimmt. Die zusammengehörige Einheit wird dadurch besonders deutlich. Ein weiterer Vorteil liegt aber auch in der einfachen und schnellen Zusammenfügbarkeit der beiden Gehäuse sowie der optimalen Unterbringung der im Inneren angeordneten Bauteile.

Das erste Gehäuse 2 weist eine Öse 6 zur Wandmontage auf. Die Öse 6 ist in Fig. 3 strichliert dargestellt, da sie sich auf der Rückseite des ersten Gehäuses 2 bzw. auf dem Boden 7 der Gehäusewanne 8 befindet. Die Aufhängevorrichtung in Form der Öse 6 ist damit bereits in das erste Gehäuse 2 integriert, so dass dieses einfach an einem entsprechenden Haken aufgehängt werden kann.

Das erste Gehäuse 2 ist mit dem zweiten Gehäuse 5 verrastbar, wodurch eine stabile Einheit entsteht.

Ebenso wie das erste Gehäuse 2 ist auch das zweite Gehäuse 5 mit Lüftungseinlässen 3, welche als Lüftungsschlitze ausgebildet sind, versehen. Dadurch wird sichergestellt, dass die Luft auch im zusammengesetzten Zustand der Vorrichtung bis an den Sensor, der im ersten Gehäuse 2 angeordnet ist, heranreicht.

Die Lüftungseinlässe 3 sind in gleichmäßiger Anordnung bzw. Gruppierung um das erste 2 sowie das zweite Gehäuse 5 vorgesehen. Dadurch wird eine optimale Luftzufuhr gewährleistet. Auch bei vertikaler Positionierung des ersten Gehäuses 2 (siehe Fig. 3) funktioniert die Luftzufuhr in entsprechender Weise wie bei horizontaler Anordnung.

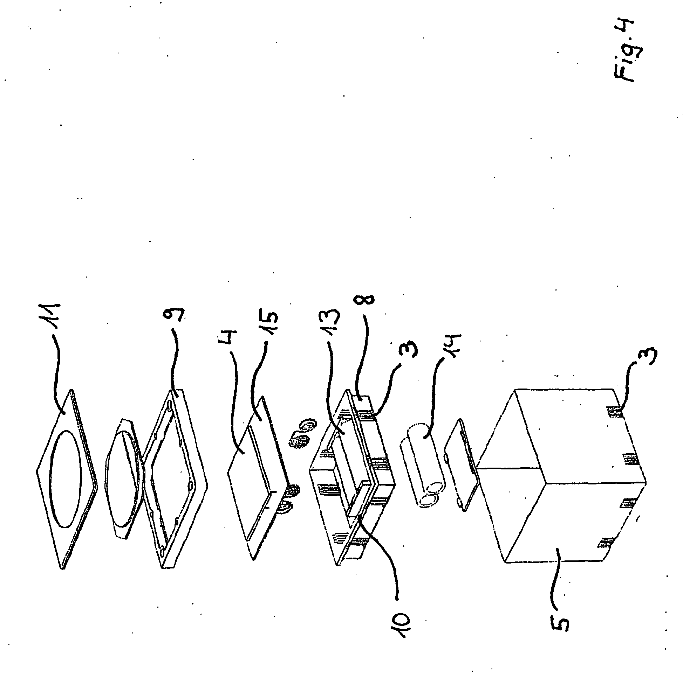

Das erste Gehäuse 2 weist einen oberseitigen Gehäuserahmen 9 auf, der auf einem umlaufenden, nach außen weisenden Rand 10 der Gehäusewanne 8 aufliegt. Wie insbesondere aus Fig. 4 hervorgeht, sind die einzelnen Bestandteile dadurch in zweckmäßiger Weise zueinander angeordnet. Auf dem Gehäuserahmen 9 sind Abdeckungen 11 a, b für die Anzeigeeinrichtung 4 vorgesehen.

Im zusammengesetzten Zustand liegt der nach außen weisende Rand 10 des ersten Gehäuses 2 bzw. der Gehäusewanne 8 auf der offenen Stirnseite des zweiten Gehäuses 5 auf. Die Gehäusewanne 8 ragt dadurch in den oberen Bereich des zweiten Gehäuses 5 hinein, wobei gleichzeitig sichergestellt ist, dass die Gehäusewanne 8 nicht in das zweite Gehäuse 5 fallen kann.

Der Gehäuserahmen 9 weist eine über seinen gesamten Umfang verlaufende Leuchteinrichtung 12 auf. Die Leuchteinrichtung 12 leuchtet ab einem bestimmten Feuchtigkeits- und/oder Temperaturgrad auf. Als Leuchtmittel können LEDs vorgesehen sein, die im Gehäuserahmen 9 angeordnet sind. Es kann sich dabei um LEDs handeln, die ein farbiges Licht, z.B. rotes Licht, aussenden, wodurch die Wirkung des Lichts für den Betrachter verstärkt wird. Außerdem verleiht das farbige Aufleuchten des Gehäuserahmens 9 der gesamten Vorrichtung ein besonderes Aussehen.

Der Feuchtigkeits- und/oder Temperaturgrad, bei welchem die Leuchteinrichtung 12 aufleuchten soll, ist individuell einstellbar.

Die aus erstem Gehäuse 2 und zweitem Gehäuse 5 zusammengesetzte Vorrichtung 1 ist im Wesentlichen würfelförmig ausgestaltet. Die Vorrichtung eignet sich dadurch auch insbesondere als Designobjekt.

Ferner ist ein (in den Zeichnungsfiguren nicht dargestellter) Sender zur Funkdatenübertragung vorgesehen, um die gemessenen Daten auch an ein anderes Gerät, welches mit einem entsprechenden Empfänger ausgestattet ist, zu senden.

Die Gehäusewanne 8 weist eine Aufnahme 13 für Batterien 14 oder Akkumulatoren auf. Außerdem ist in die Gehäusewanne 8 eine Platine 15 eingesetzt, welche mit dem Sensor sowie der Anzeigeeinrichtung 4 ausgestattet ist.

Zudem beinhaltet die Vorrichtung einen Datenspeicher zur Speicherung von gemessenen Daten. Der Datenspeicher ist allerdings in den Zeichnungsfiguren nicht dargestellt, kann aber z.B. auf der Platine 15 angeordnet sein. Mittels des Datenspeichers lassen sich die gemessenen Daten z.B. über einen bestimmten Zeitraum abspeichern.

Um die gespeicherten Informationen auslesen zu können, ist außerdem eine Schnittstelle, also eine Hardwareschnittstelle und/oder Funkschnittstelle, vorgesehen, so dass die gespeicherten Daten z.B. an einen Computer übertragbar sind und dort z.B. mittels Anwendersoftware ausgewertet werden können.

### BEZUGSZEICHENLISTE

- 1): Vorrichtung
- 2): erstes Gehäuse
- 3): Lüftungseinlass
- 4): Anzeigeeinrichtung
- 5): zweites Gehäuse
- 6): Öse
- 7): Boden
- 8): Gehäusewanne
- 9): Gehäuserahmen
- 10): Rand
- 11a, b): Abdeckung
- 12): Leuchteinrichtung
- 13): Aufnahme
- 14): Batterie
- 15): Platine

## Patentansprüche

1. Vorrichtung zur Messen der Luftfeuchtigkeit und/oder Lufttemperatur mit
- einem ersten Gehäuse (2), welches mit Lüftungseinlässen (3) versehen ist und in welchem mindestens ein Sensor zur Messung der Luftfeuchtigkeit und/oder Lufttemperatur angeordnet ist und welches mit einer Anzeigeeinrichtung (4) ausgestattet ist sowie
- einem zweiten Gehäuse (5), wobei
- das erste Gehäuse (2) zumindest bereichsweise in das zweite Gehäuse (5) einsetzbar ist, welches eine größere Höhe aufweist als das erste Gehäuse (2) und
- das erste Gehäuse (2) und das zweite Gehäuse (5) in ihrer Form insbesondere im zusammengesetzten Bereich aufeinander abgestimmt sind,
**dadurch gekennzeichnet, dass**
- das zweite Gehäuse (5) mit Lüftungseinlässen (3), insbesondere Lüftungsschlitzen, versehen ist,
- das erste Gehäuse (2) einen oberseitigen Gehäuserahmen (9) aufweist, der auf einer unterseitigen Gehäusewanne (8) aufliegt,
- der Gehäuserahmen (9) auf einem umlaufenden, nach außen weisenden Rand (10) der Gehäusewanne (8) aufliegt,
- im zusammengesetzten Zustand der nach außen weisende Rand (10) der Gehäusewanne (8) auf der offenen Stirnseite des zweiten Gehäuses (5) aufliegt, und
- das erste Gehäuse (2) und das zweite Gehäuse (5) als voneinander getrennte Teile vorgesehen sind, so dass das erste Gehäuse (2) als solches als Wandgerät zum Aufhängen an einer Wand verwendbar ist.

2. Vorrichtung nach Anspruch 1,
**dadurch gekennzeichnet, dass**
das erste Gehäuse (2) eine Öse (6) oder einen Haken zur Wandmontage aufweist.

3. Vorrichtung nach einem der vorhergehenden Ansprüche,
**dadurch gekennzeichnet, dass**
das erste Gehäuse (2) mit dem zweiten Gehäuse (5) verrastbar ist.

4. Vorrichtung nach einem der vorhergehenden Ansprüche,
**dadurch gekennzeichnet, dass**
Lüftungseinlässe (3) in gleichmäßiger Anordnung um das erste (2) und/oder zweite Gehäuse (5) vorgesehen sind.

5. Vorrichtung nach einem der vorhergehenden Ansprüche,
**dadurch gekennzeichnet, dass**
der Gehäuserahmen (9) eine insbesondere über seinen gesamten Umfang verlaufende Leuchteinrichtung (12) aufweist.

6. Vorrichtung nach Anspruch 5,
**dadurch gekennzeichnet, dass**
die Leuchteinrichtung (12) ab einem bestimmten Feuchtigkeits- und/oder Temperaturgrad leuchtet.

7. Vorrichtung nach Anspruch 6,
**dadurch gekennzeichnet, dass**
der bestimmte Feuchtigkeits- und/oder Temperaturgrad einstellbar ist.

8. Vorrichtung nach einem der vorhergehenden Ansprüche,
**dadurch gekennzeichnet, dass**
das erste Gehäuse (2) und/oder das zweite Gehäuse (5) in Draufsicht rechteckig, insbesondere quadratisch, ausgestaltet sind/ist.

9. Vorrichtung nach einem der vorhergehenden Ansprüche,
**dadurch gekennzeichnet dass**
die aus erstem (2) und zweitem Gehäuse (5) zusammengesetzte Vorrichtung (1) im Wesentlichen würfelförmig ausgestaltet ist.

10. Vorrichtung nach einem der vorhergehenden Ansprüche,
**dadurch gekennzeichnet, dass**
ein Sender zur Funkdatenübertragung vorgesehen ist.

11. Vorrichtung nach Anspruch 1,
**dadurch gekennzeichnet, dass**
die Gehäusewaime (8) eine Aufnahme für Batterien (14) oder Akkumulatoren aufweist.

12. Vorrichtung nach einem der vorhergehenden Ansprüche,
**dadurch gekennzeichnet, dass**
der Sensor und/oder die Anzeigeeinrichtung (4) auf einer Platine (15) angeordnet sind/ist.

13. Vorrichtung nach einem der vorhergehenden Ansprüche,
**dadurch gekennzeichnet, dass**
die Platine (15) in die Gehäusewanne (8) eingesetzt ist,

14. Vorrichtung nach einem der vorhergehenden Ansprüche,
**dadurch gekennzeichnet, dass**
ein Datenspeicher vorgesehen ist.

15. Vorrichtung nach einem der vorhergehenden Ansprüche,
**dadurch gekennzeichnet, dass**
eine Schnittstelle zur Datenübertragung vorgesehen ist.

## Claims

1. Device for measuring air humidity and/or air temperature, comprising
- a first housing (2), which is provided with ventilation inlets (3) and in which there is arranged at least one sensor for measuring the air humidity and/or air temperature, and which is equipped with a display device (4), and also
- a second housing (5),
- it being possible for the first housing (2) to be inserted at least partly into the second housing (5), which has a greater height than the first housing (2), and
- the first housing (2) and the second housing (5) being matched to each other in shape, in particular in the assembled area,
**characterized in that**
- the second housing (5) is provided with ventilation inlets (3), in particular ventilation slots,
- the first housing (2) has a housing frame (9) on the upper side, which rests on a housing well (8) on the underside,
- the housing frame (9) rests on a circumferential edge (10) of the housing well (8) that points outwards,
- in the assembled state, the outwardly pointing edge (10) of the housing well (8) rests on the open end of the second housing (5), and
- the first housing (2) and the second housing (5) are provided as parts separated from each other, so that the first housing (2) as such can be used as a wall-mounted device to be hung on a wall.

2. Device according to Claim 1,
**characterized in that**
the first housing (2) has an eye (6) or a hook for wall mounting.

3. Device according to one of the preceding claims,
**characterized in that**
the first housing (2) can be latched to the second housing (5).

4. Device according to one of the preceding claims,
**characterized in that**
ventilation inlets (3) are provided in a uniform arrangement around the first (2) and/or second housing (5).

5. Device according to one of the preceding claims,
**characterized in that**
the housing frame (9) has an illumination device (12) in particular extending over its entire circumference.

6. Device according to Claim 5,
**characterized in that**
the illumination device (12) lights up, starting at a specific humidity and/or temperature level.

7. Device according to Claim 6,
**characterized in that**
the specific humidity and/or temperature level is adjustable.

8. Device according to one of the preceding claims,
**characterized in that**
the first housing (2) and/or the second housing (5) is/are configured to be rectangular, in particular square, in plan view.

9. Device according to one of the preceding claims,
**characterized in that**
the device (1) assembled from the first (2) and second housing (5) is configured substantially in the form of a cube.

10. Device according to one of the preceding claims,
**characterized in that**
a transmitter for radio data transmission is provided.

11. Device according to Claim 1,
**characterized in that**
the housing well (8) has a holder for batteries (14) or accumulators.

12. Device according to one of the preceding claims,
**characterized in that**
the sensor and/or the display device (4) is/are arranged on a board (15).

13. Device according to one of the preceding claims,
**characterized in that**
the board (15) is inserted into the housing well (8).

14. Device according to one of the preceding claims,
**characterized in that**
a data storage device is provided.

15. Device according to one of the preceding claims,
**characterized in that**
an interface for data transmission is provided.

## Revendications

1. Dispositif de mesure du taux d'humidité de l'air et/ou de la température de l'air comprenant
- un premier boîtier (2) qui est muni d'entrées de ventilation (3) et dans lequel est disposé au moins un capteur pour mesurer le taux d'humidité de l'air et/ou la température de l'air et qui est équipé d'un dispositif d'affichage (4), ainsi
- qu'un deuxième boîtier (5),
- le premier boîtier (2) pouvant être inséré au moins par zones dans le deuxième boîtier (5), lequel présente une hauteur supérieure à celle du premier boîtier (2) et
- le premier boîtier (2) et le deuxième boîtier (5) étant assortis l'un à l'autre au niveau de leur forme, notamment dans la zone assemblée,
**caractérisé en ce que**
- le deuxième boîtier (5) est muni d'entrées de ventilation (3), notamment des fentes de ventilation,
- le premier boîtier (2) présente un cadre de boîtier (9) côté supérieur, lequel repose sur une cuvette de boîtier (8) côté inférieur,
- le cadre de boîtier (9) repose sur un bord (10) périphérique orienté vers l'extérieur de la cuvette de boîtier (8),
- à l'état assemblé, le bord (10) orienté vers l'extérieur de la cuvette de boîtier (8) repose sur le côté frontal ouvert du deuxième boîtier (5) et
- le premier boîtier (2) et le deuxième boîtier (5) sont prévus sous la forme de pièces séparées l'une de l'autre de sorte que le premier boîtier (2) peut être utilisé en tant que tel comme appareil mural à accrocher à un mur.

2. Dispositif selon la revendication 1, **caractérisé en ce que** le premier boîtier (2) présente un oeillet (6) ou un crochet pour le montage mural.

3. Dispositif selon l'une des revendications précédentes, **caractérisé en ce que** le premier boîtier (2) peut être enclenché avec le deuxième boîtier (5).

4. Dispositif selon l'une des revendications précédentes, **caractérisé en ce que** des entrées de ventilation (3) sont prévues dans une disposition uniforme autour du premier (2) et/ou du deuxième boîtier (5).

5. Dispositif selon l'une des revendications précédentes, **caractérisé en ce que** le cadre de boîtier (9) présente un dispositif d'éclairage (12) qui s'étend notamment sur tout son pourtour.

6. Dispositif selon la revendication 5, **caractérisé en ce que** le dispositif d'éclairage (12) s'allume à partir d'un degré d'humidité et/ou de température donné.

7. Dispositif selon la revendication 6, **caractérisé en ce que** le degré d'humidité et/ou de température donné est réglable.

8. Dispositif selon l'une des revendications précédentes, **caractérisé en ce que** le premier boîtier (2) et/ou le deuxième boîtier (5), vu(s) de dessus, est/sont réalisé(s) en forme rectangulaire, notamment carrée.

9. Dispositif selon l'une des revendications précédentes, **caractérisé en ce que** le dispositif (1) constitué du premier (2) et du deuxième boîtier (5) est pour l'essentiel réalisé en forme de cube.

10. Dispositif selon l'une des revendications précédentes, **caractérisé en ce qu'**il est prévu un émetteur pour la radiotransmission de données.

11. Dispositif selon la revendication 1, **caractérisé en ce que** la cuvette de boîtier (8) présente un logement pour des piles (14) ou des accumulateurs.

12. Dispositif selon l'une des revendications précédentes, **caractérisé en ce que** le capteur et/ou le dispositif d'affichage (4) est/sont disposé(s) sur une platine (15).

13. Dispositif selon l'une des revendications précédentes, **caractérisé en ce que** la platine (15) est insérée dans la cuvette de boîtier (8).

14. Dispositif selon l'une des revendications précédentes, **caractérisé en ce qu'**une mémoire de données est prévue.

15. Dispositif selon l'une des revendications précédentes, **caractérisé en ce qu'**une interface de transmission de données est prévue.
